# EUROPÄISCHE PATENTSCHRIFT

(11) **EP 2 477 876 B1**
(45) Veröffentlichungstag und Bekanntmachung des Hinweises auf die Patenterteilung: **17.07.2013**
(21) Anmeldenummer: 10763120.2
(22) Anmeldetag: 17.09.2010
(51) Int. Cl.: B62D 25/20, B62D 29/00

(54) **FAHRZEUGKAROSSERIEAUFBAU IM BODENBEREICH DER INSASSENKABINE UND ZUGEORDNETES FERTIGUNGSVERFAHREN**
VEHICLE BODYWORK STRUCTURE IN THE FLOOR REGION OF THE OCCUPANT COMPARTMENT AND ASSOCIATED MANUFACTURING METHOD
STRUCTURE DE CARROSSERIE DE VEHICULE SITUEE DANS LA ZONE DU PLANCHER DE L'HABITACLE ET PROCEDE DE FABRICATION ASSOCIE

(30) Priorität: 18.09.2009 DE 102009042187
(43) Veröffentlichungstag der Anmeldung: 25.07.2012
(73) Patentinhaber: Audi AG, 85045 Ingolstadt (DE)
(72) Erfinder: WEIGL, Willibald, 85095 Zandt (DE); MAIER, Hans-Peter, 85283 Wolnzach (DE); SCHROMM, Martin, 71229 Leonberg (DE); URBAN, Tobias, 74354 Besigheim (DE)
(74) Vertreter: Engelhardt, Harald
(86) Internationale Anmeldenummer: PCT/EP2010/005716
(87) Internationale Veröffentlichungsnummer: WO 2011/032715

(56) Entgegenhaltungen:
- EP-A1- 1 640 252
- US-A- 5 611 593

## Beschreibung

Die Erfindung betrifft einen Fahrzeugkarosserieaufbau im Bodenbereich der Insassenkabine nach dem Oberbegriff des Anspruchs 1 sowie ein zugeordetes Fertigungsverfahren nach dem Oberbegriff des Anspruchs 8. Das Dokument EP 1 640 252 A1 beschreibt einen solchen Fahrzeugkarosserieaufbau.

Aus der DE 44 14 472 C2 und DE 602 01 115 E2 ist jeweils ein Fahrzeugkarosserieaufbau im Bodenbereich der Insassenkabine bekannt mit beidseitig jeweils einem Längsträger im Bodenbereich der Insassenkabine, welcher zwischen einem Mittentunnel und einem Seitenschweller in Fahrzeuglängsrichtung verläuft. Konkret ist der Längsträger hier dadurch gebildet, dass ein längsverlaufendes, nach oben offenes Hutprofil von unten her auf das Bodenblech gesetzt und an den Huträndern durch Schweißen mit dem Bodenblech verbunden ist. Das Längsträgerprofil ragt somit insgesamt nach unten ab, was zu einer relativ stark zerklüffteten und strömungsungünstigen Unterbodenstruktur führt. Zudem handelt es sich hier um einen konventionellen Stahlblech-Karosseriebau, ohne spezielle Maßnahmen für eine Gewichtsreduzierung.

Bei allgemein bekannten modernen Fahrzeugkarosserien kommen zusätzlich zu strömungsgünstigen Gestaltungen zunehmend Werkstoffe aus Leichtmetallen oder Leichtmetalllegierungen, insbesondere aus Aluminium zum Einsatz um durch Gewichtseinsparungen den Kraftstoffverbrauch zu reduzieren. Die Steifigkeiten und Fügetechnologien für Leichtmetallbauteile unterscheiden sich vom bisherigen konventionellen, ausschließlichen Stahlblechbau, so dass dadurch auftretende Probleme mit einem auf die jeweilige Karosseriestelle genau abgestimmten Material-Mix bei entsprechender Kombination von Bauteilen sowie mit kostengünstigen und geeigneten Fügetechniken für einen Großserieneinsatz zu lösen sind.

Aufgabe der Erfindung ist es, einen gattungsgemäßen konventionellen Fahrzeugkarosserieaufbau im Bodenbereich der Insassenkabine so weiterzubilden, dass ein gewichtsgünstiger Aufbau mit der erforderlichen Steifigkeit und hoher Crash-Sicherheit sowie mit einer für einen Großserieneinsatz geeigneten Fügetechnik erhalten wird.

Diese Aufgabe wird dadurch gelöst, dass sich der Längsträger jeweils längs durchgehend über die gesamte Fußraumlänge vom Vorderwagen bis zu einem Fersenblech erstreckt. Dabei ist der Längsträger als geschlossener Längshohlträger an seiner Unterseite durch eine Längsträger-Stufenabkantung des Bodenblechs und an seiner Oberseite durch ein daran angeschlossenes Längsträger-Winkelprofil als Längsträger-Schließteil gebildet.

Für einen gewichtsgünstigen Aufbau des Längsträgers sind hier zwei Längsträgerwände unmittelbar aus dem Bodenblech gebildet und die anderen beiden Längsträgerwände durch das Längsträger-Schließteil realisiert. Zudem geht hier die Unterbodenfläche von vorne nach hinten relativ glatt und damit strömungsgünstig durch.

Zur Erzielung einer Steifigkeit im Falle eines Front- oder Seiten-Crashs wird das Längsträger-Schließteil als Längsträger-Stahlschließteil aus warmgeformtem Stahl hergestellt. Das Bodenblech kann demgegenüber als besonders gewichtsgünstiges Boden-Aluminiumblech ausgeführt sein, so dass der Bodenaufbau insgesamt eine Leichtbaulösung mit hoher Stabilität und Crash-Sicherheit bei einem Front- und Seitencrash darstellt.

Für die Verbindung von Aluminiumblechen und Stahlblechen sind allgemein aufwendige Schweißtechniken, wie Laserstrahlschweißen, Schutzgasschweißen, etc. bekannt. Hier wird jedoch zur Verbindung des Boden-Aluminiumblechs und des Längsträger-Stahlschließteils eine kostengünstige und für die Großserienherstellung gut geeignete Nietverbindung vorgeschlagen, wobei vorzugsweise die Verbindungen durch Vollstanznieten mit hoher Festigkeit gestellt werden.

Das Längsträger-Stahlschließteil kann vorteilhaft aus zwei Längsteilen bestehen, nämlich einem Längsträger-Seitenschließstahlteil mit einer ersten Längsträgerseitenwand und in Z-Form abgekanteten Randflanschen und einem etwa planen Längsträger-Obenschließstahlteil als Deckenteil. Da es sich hier jeweils um Stahlblechteile handelt, können diese an einem Überlappungsstoß mit einem Randflansch einfach durch Schweißen, vorzugsweise durch Widerstandspunktschweißen verbunden werden. Da diese Schweißverbindung im Trockenbereich liegt sind dabei keine besonderen Maßnahmen hinsichtlich einer Dichtigkeit erforderlich. Durch den zweiteiligen Aufbau des Längsträger-Stahlschließteils kann einfach eine Anpassung der Gestalt des Längsträgers an geometrische Gegebenheiten und Steifigkeitsanforderungen, insbesondere eine Anpassung an einen Bodenverlauf oder eine Durchmesseränderung im Längsverlauf durchgeführt werden.

Ebenso kann das Bodenblech insbesondere für Gestaltungsfreiräume mehrteilig ausgeführt sein mit einem Längsträger-Stufenaluminiumblech mit der zweiten Längsträger-Seitenwand und der Längsträger-Bodenwand. Dieses Längsträger-Stufenaluminiumblech bildet mit seinen Längsrändern sowie mit den Längsträgern des Längsträger-Stahlschließteils als auch jeweils mit einem anschließenden Boden-Seitenaluminiumblech und mit einem anschließenden Boden-Mittenaluminiumblech einen dreilagigen Überlappungsstoß. An diesen Überlappungsstößen wird eine Verbindung durch Nieten hergestellt, wobei der Stahlblechrand jeweils niettechnisch und hinsichtlich einer möglichen Korrosion vorteilhaft zwischen den Aluminiumblechrändern liegen soll.

Diese hier im Nassbereich liegenden Nietverbindungen werden bevorzugt durch Vollstanznieten in Verbindung mit einer Verklebung am jeweiligen Überlappungsstoß sowie gegebenenfalls durch zusätzliches Umspritzen mit Dichtmaterial hergestellt. Dadurch wird eine besonders hohe Steifigkeit bei hoher Dichtigkeit und guten Korrosionsschutz erreicht.

Da die Crash-Belastung insbesondere bei einem Front-Crash im vorderen Bereich des Längshohlträgers besonders groß ist, soll dort der Querschnitt relativ groß und etwa quadratisch sein. Im Längsverlauf des Längshohlträgers kann die Querschnitthöhe jedoch kontinuierlich abnehmen und es ist ausreichend, wenn der Querschnitt im hinteren Bereich ein flaches Rechteck bildet.

Als weitere Optimierung für einen minimalen Materialeinsatz zu einem kosten- und gewichtsgünstigen Aufbau bei ausreichender Steifigkeit kann die Wandstärke des Längsträger-Schließteils entsprechend den Steifigkeitsanforderungen im Längsverlauf variieren (taylored blanks).

Hinsichtlich eines Fertigungsverfahrens wird die Aufgabe der Erfindung dadurch gelöst, dass das gegebenenfalls mehrteilige Bodenblech mit dem gegebenenfalls zweiteiligen Längsträger-Schließteil zumindest teilweise als Verbundteil und als Vormontagemodul hergestellt und in der Endmontage verbaut wird.

Anhand einer Zeichnung wird die Erfindung weiter erläutert.

### Es zeigen:

- Fig. 1: eine Ansicht von schräg oben auf einen Fahrzeugkarosserieaufbau im linken Bodenbereich einer Insassenkabine;
- Fig. 2: den Fahrzeugkarosserieaufbau nach Fig. 1 in einer Ansicht von unten; und
- Fig. 3: eine schematische Schnittdarstellung entlang der Linie A-A aus Fig. 1.

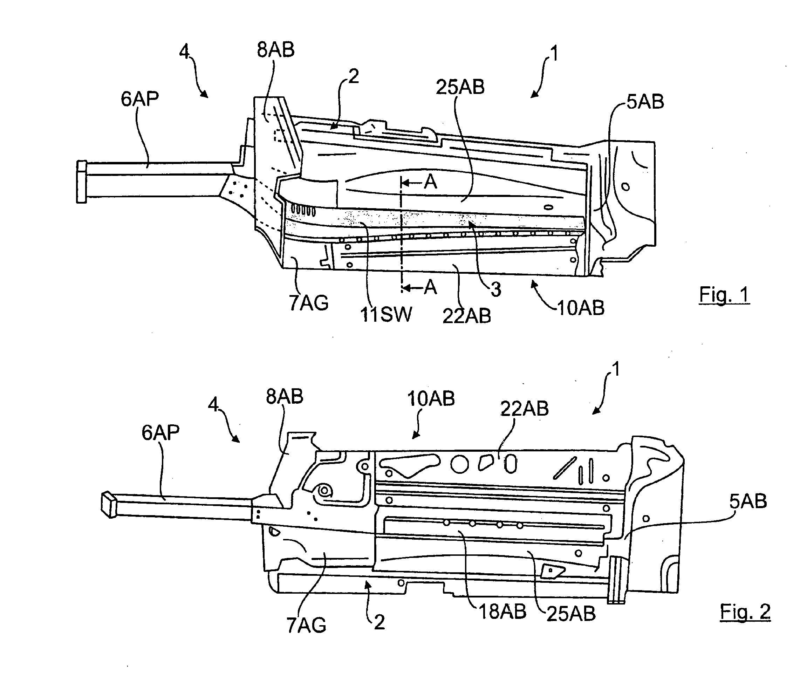

In den Fig. 1 und 2 ist ein Fahrzeugkarosserieaufbau 1 des Bodenbereichs einer Insassenkabine, im linken Bereich eines in Fahrzeuglängsmitte geschnittenen Mittentunnels 2 dargestellt. Im Bodenbereich ist zwischen dem Mittentunnel 2 und einem nicht dargestellten Seitenschweller ein Längsträger 3 angeordnet, der längs durchgehend über die gesamte Fußraumlänge vom Vorderwagenbereich 4 ausgehend bis zu einem Fersenblech 5AB verläuft. Am Längsträger 3 schließt sich nach vorne ein Vorderwagen-Längsträger 6AP als Aluminiumprofil an. Der Vorderwagenlängsträger AP und der Längsträger 3 sind im vorderen Fußraumbereich an einem wannenförmig nach vorne oben verlaufenden und mit Aufnahmekonturen versehenen Boden-Frontaluminiumgussteil 7AG abgestützt und befestigt.

Bei den verwendeten Indices zu den nummerischen Bezugszeichen bedeuten

| | |
|---|---|
| SW = warmumgeformter Stahl | AP = Aluminiumprofil |
| AB = Aluminiumblech | AG = Aluminiumguss |

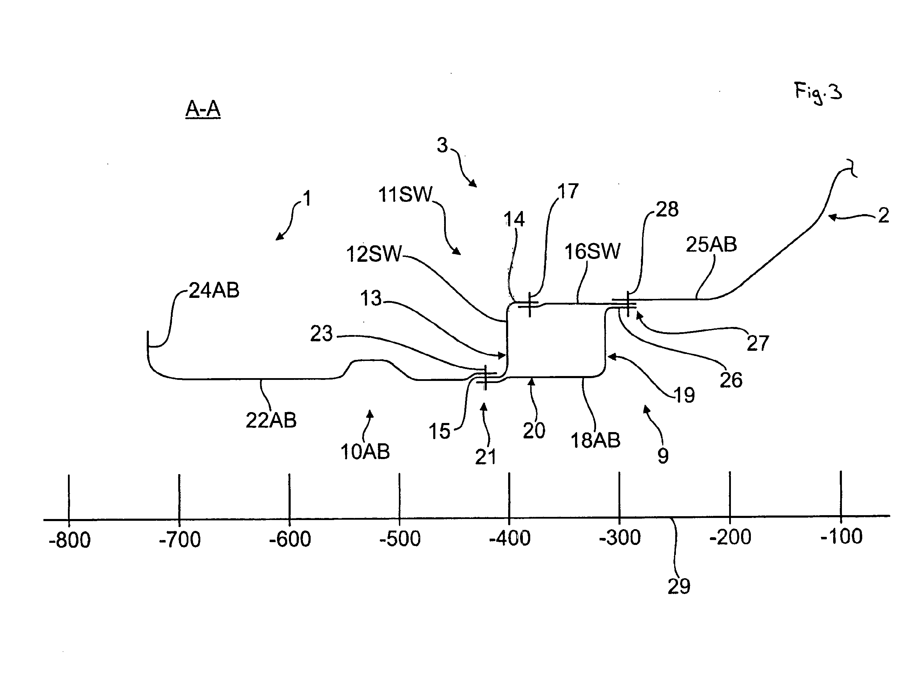

Aus Fig. 1 in Verbindung mit Fig. 3 ist ersichtlich der Querschnitt des Längsträgers 3 als Längshohlträger im vorderen Bereich anschließend an eine Stirnwand 8AB etwa quadratisch und nimmt kontinuierlich über den Längsverlauf nach hinten bis zu einem flachen Rechteckquerschnitt ab.

Der konkrete Aufbau wird weiter unter Bezug auf die schematische Schnittdarstellung nach Fig. 3 weiter erläutert:

Der Längsträger 3 ist an seiner Unterseite durch eine Längsträger-Stufenabkantung 9 des Bodenblechs 10AB und an seiner Oberseite durch ein daran angeschlossenes Längsträger-Winkelprofil als Längsträger-Schließteil 11 SW gebildet, wobei das Längsträger-Schließteil 11SW aus warmumgeformtem Stahl mit variierenden Wandstärken hergestellt ist. Das Bodenblech 10AB ist dagegen als Aluminiumblechteil hergestellt.

In einer weiteren Konkretisierung besteht das Längsträger-Schließteil 11SW aus zwei Längsteilen, nämlich einem Längsträger-Seitenschließstahlteil 12SW mit einer ersten Längsträger-Seitenwand 13 und zwei abgekanteten Randflanschen 14, 15. Zudem besteht das Längsträger-Schließteil 11 SW aus einem Längsträger-Obenschließstahlteil 16SW als Deckenteil, wobei dieses an einem Überlappungsstoß durch eine Widerstandspunktschweißverbindung 17 mit dem Randflansch 14 des Längsträger-Seitenschließstahlteils 12SW verbunden ist. Auch das Bodenblech 10AB ist mehrteilig ausgeführt mit einem Blechwinkelprofil als Längsträger-Stufenaluminiumblech 18AB mit der zweiten Längsträger-Seitenwand 19 und der Längsträger-Bodenwand 20. An einem Überlappungsstoß 21 schließt sich an das Längsträger-Stufenaluminiumblech 18AB nach seitlich außen ein Boden-Seitenaluminiumblech 22AB an, wobei am Überlappungsstoß 21 der Randflansch 15 des Längsträger-Seitenschließstahlteils 12SW zwischen den Rändern des Längsträger-Stufenaluminiumblechs 18AB und des Boden-Seitenaluminiumblechs 22 liegt und eine Verbindung durch eine Vollstanznietverbindung 23 zusammen mit einer Verklebung durchgeführt ist. Der seitlich aufgekantete Längsstreifen 24AB des Boden-Seitenaluminiumblechs 22 ist an einen (nicht dargestellten) Seitenschweller angeschlossen.

Weiter ist als Teil des Bodenblechs 10AB das Längsträger-Stufenaluminiumblech 18AB mit einem Boden-Mittenaluminiumblech 25AB weitergeführt, welches zur Längsmitte oben hin abbiegt und den Mittentunnel 2 mit ausbildet. Ein abgekanteter Randflansch 26 des Längsträger-Stufenaluminiumblechs 18AB sowie ein Rand des Bodenmittenaluminiumblechs 25AB liegen in einem Überlappungsstoß 27 mit einem dazwischen verlaufenden Rand des Längsträger-Obenschließstahlteils 16SW übereinander, wobei auch hier im Nassbereich eine Verbindung durch eine Vollstanznietverbindung 28 zusammen mit einer Verklebung und gegebenenfalls durch zusätzliches Umspritzen mit Dichtmaterial hergestellt ist.

Zur Verdeutlichung der Querabmessungen ist in Fig. 3 ein Maßstab 29 angegeben, bei dem der (nicht mehr gezeigte) Wert 0 der Fahrzeuglängsmitte entspricht und die angegebenen Zahlenwerte Millimeterwerte in Y-Richtung zur linken Fahrzeugseite hin darstellen.

**Bezugszeichenliste**

| | |
|---|---|
| 1 | Fahrzeugkarosserieaufbau |
| 2 | Mittenmodul |
| 3 | Längsträger |
| 4 | Vorderwagenbereich |
| 5AB | Fersenblech |
| 6AP | Vorderwagen-Längsträger |
| 7AG | Boden-Frontaluminiumgussteil |
| 8AB | Stirnwand |
| 9 | Längsträgerstufenabkantung |
| 10AB | Bodenblech |
| 11SW | Längsträger-Schließteil |
| 12SW | Längsträger-Seitenschließstahlteil |
| 13 | erste Längsträger-Seitenwand |
| 14 | Randflansch |
| 15 | Randflansch |
| 16SW | Längsträger-Obenschließstahlteil |
| 17 | Widerstands-Punkt-Schweißverbindung |
| 18AB | Längsträger-Stufenaluminiumblech |
| 19 | zweite Längsträger-Seitenwand |
| 20 | Längsträger-Bodenwand |
| 21 | Überlappungsstoß |
| 22AB | Boden-Seitenaluminiumblech |
| 23 | Vollstanznietverbindung |
| 24AB | Längsstreifen |
| 25AB | Boden-Mittenaluminiumblech |
| 26 | Randflansch |
| 27 | Überlappungsstoß |
| 28 | Vollstanznietverbindung |
| 29 | Maßstab |

## Patentansprüche

1. Fahrzeugkarosserieaufbau im Bodenbereich der Insassenkabine mit einem Bodenblech und mit beidseitig jeweils einem Längsträger (3) im Bodenbereich der Insassenkabine zwischen einem Mittentunnel (2) und einem Seitenschweller,
wobei sich der Längsträger (3) jeweils längs durchgehend über die gesamte Fußraumlänge vom Vorderwagen (4) bis zu einem Fersenblech (5AB) erstreckt,
**dadurch gekennzeichnet, dass** der Längsträger (3) als geschlossener Längshohlträger an seiner
Unterseite durch eine Längsträger-Stufenabkantung (9) des Bodenblechs (10AB) und an seiner Oberseite durch ein daran angeschlossenes Längsträger-Winkelprofil als Längsträger-Schließteil (11 SW) gebildet ist.

2. Fahrzeugkarosserieaufbau nach Anspruch 1, **dadurch gekennzeichnet,**
**dass** das Bodenblech (10AB) ein Boden-Aluminiumblech ist und das Längsträger-Schließteil (11SW) ein Längsträger-Stahlschließteil aus warmgeformtem Stahl ist, und
**dass** deren Verbindung an Überlappungsstößen (21, 27) durch Nieten, vorzugsweise durch Vollstanznietverbindungen (23,2 8) hergestellt ist.

3. Fahrzeugkarosserieaufbau nach Anspruch 2, **dadurch gekennzeichnet, dass** das Längsträger-Stahlschließteil (11SW) aus zwei Längsteilen besteht, einem Längsträger-Seitenschließteil (12SW) mit einer ersten Längsträger-Seitenwand (13) und in Z-Form abgekanteten Randflanschen (14, 15) und einem etwa planen Längsträger-Obenschließstahlteil (16SW) als Deckelteil, wobei das Längsträger-Seitenschließstahlteil (12SW) und das Längsträger-Obenschließstahlteil (16SW) an einem Überlappungsstoß und an einem Randflansch 14 durch Schweißen, vorzugsweise durch Widerstands-Punkt-Schweißverbindungen (17)verbunden sind.

4. Fahrzeugkarosserieaufbau nach einem der Ansprüche 2 oder 3, **dadurch gekennzeichnet, dass** das Bodenblech (10AB) mehrteilig ausgeführt ist, mit einem Längsträger-Stufenaluminiumblech (18AB) mit der zweiten Längsträger-Seitenwand (19) und der Längsträger-Bodenwand (20), wobei das Längsträger-Stufenaluminiumblech (18AB) mit seinen Längsrändern sowohl mit den Längsrändern des Längsträger-Stahlschließteils (11SW) als auch jeweils mit einem anschließenden Boden-Seitenaluminiumblech (22AB) und mit einem anschließenden Boden-Mittenaluminiumblech (25AB) einen Überlappungsstoß (21, 27) bildet, an dem jeweils eine Verbindung durch Nieten hergestellt ist, wobei jeweils der Stahlblechrand des Längsträger-Stahlschließteils (11 SW) zwischen den Aluminiumblechrändern liegt.

5. Fahrzeugkarosserieaufbau nach Anspruch 4, **dadurch gekennzeichnet, dass** die im Nassbereich liegenden Verbindungen durch Vollstanznietverbindungen (23, 28) zusammen mit einer Verklebung am jeweiligen Überlappungsstoß (21, 27) sowie gegebenenfalls durch zusätzliches Umspritzen mit Dichtmaterial hergestellt sind.

6. Fahrzeugkarosserieaufbau nach einem der Ansprüche 1 bis 5, **dadurch gekennzeichnet, dass** der Querschnitt des Längshohlträgers (3) im vorderen Bereich relativ groß und etwa quadratisch ist und die Höhe im Längsverlauf nach hinten kontinuierlich abnimmt, sodass der Querschnitt im hinteren Bereich ein flaches Rechteck ist.

7. Fahrzeugkarosserieaufbau nach einem der Anspruch 1 bis 6, **dadurch gekennzeichnet, dass** die Wandstärke des Längsträger-Schließteils (11SW) entsprechend den Steifigkeitsanforderungen im Längsverlauf variiert.

8. Fertigungsverfahren für einen Karosserieaufbau nach einem der Ansprüche 1 bis 7, **dadurch gekennzeichnet, dass** das gegebenenfalls mehrteilige Bodenblech (10AB) mit dem gegebenenfalls zweiteiligen Längsträger-Schließteil (11 SW) zumindest teilweise als Verbundteil und als Vormontagemodul hergestellt und in der Endmontage verbaut wird.

## Claims

1. Vehicle body structure in the floor region of the passenger compartment, comprising a floor panel and a longitudinal beam (3) on either side in the floor region of the passenger compartment between a central tunnel (2) and a side sill, each longitudinal beam (3) extending longitudinally and continuously over the entire length of the footwell from the front end (4) to a heel plate (5AB), **characterised in that** the longitudinal beam (3) is formed as a closed longitudinal hollow beam at its bottom side by a longitudinal beam stepped bend (9) of the floor panel (10AB) and at its top side by an adjoining longitudinal beam angled profile as a longitudinal beam closure part (11SW).

2. Vehicle body structure according to claim 1, **characterised in that** the floor panel (10AB) is a floor aluminium plate and the longitudinal beam closure part (11 SW) is a longitudinal beam steel closure part made from hot-formed steel, and **in that** the floor panel and the closure part are connected at lap joints (21, 27) by rivets, preferably by solid punch rivet connections (23, 28).

3. Vehicle body structure according to claim 2, **characterised in that** the longitudinal beam steel closure part (11SW) consists of two longitudinal parts, a longitudinal beam side closure part (12SW) having a first longitudinal beam sidewall (13) and edge flanges (14, 15) bent in a Z-shape, and an approximately planar longitudinal beam top closure steel part (16SW) as a cover part, the longitudinal beam side closure steel part (12SW) and the longitudinal beam top closure steel part (16SW) being connected at a lap joint and at an edge flange (14) by welding, preferably by resistance spot welding connections (17).

4. Vehicle body structure according to either claim 2 or claim 3, **characterised in that** the floor panel (10AB) is made in multiple parts, comprising a longitudinal beam stepped aluminium plate (18AB) having the second longitudinal beam sidewall (19) and the longitudinal beam floor wall (20), the longitudinal edges of the longitudinal beam stepped aluminium plate (18AB) forming a lap joint (21, 27) with the longitudinal edges of the longitudinal beam steel closure part (11 SW) as well as with an adjoining floor side aluminium plate (22AB) and with an adjoining floor central aluminium plate (25AB), at each of which lap joints a connection is produced by means of rivets, the steel plate edge of the longitudinal beam steel closure part (11SW) being located between the aluminium plate edges in each case.

5. Vehicle body structure according to claim 4, **characterised in that** the connections in the wet region are produced by full punch rivet connections (23, 28) in combination with bonding at the respective lap joints (21, 27) and optionally by additional coating with sealing material.

6. Vehicle body structure according to any of claims 1 to 5, **characterised in that** the cross section of the longitudinal hollow beam (3) in the front region is relatively large and approximately square and the height decreases continuously in the longitudinal extension towards the rear such that the cross section in the rear region is a flat rectangle.

7. Vehicle body structure according to any of claims 1 to 6, **characterised in that** the wall thickness of the longitudinal beam closure part (11 SW) varies in the longitudinal extension according to the stiffness requirements.

8. Method for manufacturing a body structure according to any of claims 1 to 7, **characterised in that** the optionally multi-part floor panel (10AB) comprising the optionally two-part longitudinal beam closure part (11 SW) is produced at least in part as a composite part and as a pre-assembly module and is used in the final assembly.

## Revendications

1. Structure de carrosserie de véhicule automobile dans la zone de plancher de l'habitacle, comprenant une tôle de plancher et, des deux côtés, respectivement, un longeron (3) dans la zone de plancher de l'habitacle entre un tunnel central (2) et un seuil de porte latérale,
dans laquelle le longeron (3) s'étend respectivement
longitudinalement de manière ininterrompue sur toute la longueur de l'espace de pied de la partie avant (4) du véhicule jusqu'à une tôle de talon (5AB),
**caractérisée en ce que**
le longeron (3) se présente sous la forme d'un
longeron creux fermé formé dans sa partie inférieure par un repli en gradin (9) de la tôle de plancher (10AB) et sur sa partie supérieure par un profilé angulaire qui lui est raccordé comme pièce de fermeture (11SW) du longeron.

2. Structure de carrosserie de véhicule automobile
selon la revendication 1, **caractérisée en ce que** : la tôle de plancher (10AB) est une tôle de plancher en
aluminium et la partie de fermeture (11SW) du longeron est une partie de fermeture d'acier du longeron constituée d'un acier façonné à chaud, et leur liaison est assurée sur des joints à
recouvrement (21, 27) par des rivets, de préférence par des liaisons rivetées pleinement estampées (23, 28).

3. Structure de carrosserie de véhicule automobile selon la revendication 2, **caractérisée en ce que** la partie de fermeture d'acier (11SW) du longeron est constituée de deux parties longitudinales, une partie de fermeture latérale (12SW) du longeron avec une première paroi latérale (13) du longeron et des brides marginales (14, 15) repliées en forme de Z et une partie d'acier de fermeture supérieure (16SW) plus ou moins plane du longeron en tant que partie de recouvrement, dans laquelle la partie d'acier de fermeture latérale (12SW) du longeron et la partie d'acier de fermeture supérieure (16SW) du longeron sont reliées sur un joint à recouvrement et sur une bride marginale 14 par soudage, de préférence par des liaisons de soudure par points de résistance (17).

4. Structure de carrosserie de véhicule automobile selon l'une quelconque des revendications 2 ou 3, **caractérisée en ce que** la tôle de plancher (10AB) a une conformation en plusieurs parties, avec une tôle d'aluminium à gradin (18AB) du longeron avec la deuxième paroi latérale (19) du longeron et avec la paroi de plancher (20) du longeron, dans laquelle la tôle d'aluminium à gradin (18AB) du longeron avec ses bords longitudinaux forme autant avec les bords longitudinaux de la partie de fermeture d'acier (11SW) du longeron que, également, respectivement, avec une tôle d'aluminium latérale adjacente (22AB) du plancher et une tôle d'aluminium centrale adjacente (25AB) du plancher un joint à recouvrement (21, 27), sur lequel est formée respectivement une liaison par rivetage, dans laquelle, respectivement, le bord de la tôle d'acier de la partie de fermeture d'acier (11SW) du longeron se trouve entre les bords de la tôle d'aluminium.

5. Structure de carrosserie de véhicule automobile selon la revendication 4, **caractérisée en ce que** les liaisons qui se trouvent dans la zone humide sont réalisées par des liaisons rivetées pleinement estampées (23, 28) conjointement avec un collage sur le joint de recouvrement respectif (21, 27) ainsi qu'éventuellement par pulvérisation supplémentaire au moyen d'un matériau d'étanchéité.

6. Structure de carrosserie de véhicule automobile selon l'une quelconque des revendications 1 à 5, **caractérisée en ce que** la section transversale du longeron creux (3) est relativement grande et plus ou moins carrée dans la zone avant et la hauteur diminue en continu vers l'arrière dans la direction longitudinale de sorte que la section transversale fasse un angle droit plat dans la zone arrière.

7. Structure de carrosserie de véhicule automobile selon l'une quelconque des revendications 1 à 6, **caractérisée en ce que** l'épaisseur de paroi de la partie de fermeture (11SW) du longeron varie en fonction des exigences de rigidité dans la direction longitudinale.

8. Procédé de fabrication d'une structure de carrosserie selon l'une quelconque des revendications 1 à 7, **caractérisée en ce que** la tôle de plancher (10AB) éventuellement multiple avec la partie de fermeture (11SW) du longeron éventuellement en deux parties est fabriquée au moins en partie sous la forme d'une pièce composite et d'un module de pré-montage et est masquée lors du montage final.
